# EUROPÄISCHE PATENTANMELDUNG

(11) **EP 1 983 322 A2**
(43) Veröffentlichungstag der Anmeldung: **22.10.2008**
(21) Anmeldenummer: 08002248.6
(22) Anmeldetag: 07.02.2008
(51) Int. Cl.: G01L 5/16, G01M 9/06, G01M 17/007

(54) **Rad, Prüfstand und Verfahren zur Ermittlung von aerodynamischen Kennwerten eines Testfahrzeugs**

(30) Priorität: 18.04.2007 DE 102007018192
(71) Anmelder: Dr. Ing. h.c. F. Porsche Aktiengesellschaft, 70435 Stuttgart (DE)
(72) Erfinder: Müller, Reiner, 75417 Muehlacker (DE); Stumpf, Hauke, 71229 Höfingen (DE); Loda, Hans-Peter, 75242 Neuhausen/Schellbronn (DE); Eckert, Winfried, 71272 Renningen (DE)

(57) **Zusammenfassung**

Die Erfindung betrifft ein Rad (2) für ein Testfahrzeug (4), wobei das Rad (2) eine Felge (70) und eine Nabe (60) aufweist, und wobei im Kraftfluss zwischen der Nabe (60) und der Felge (70) zumindest ein Kraftsensor angeordnet ist. Die Erfindung betrifft auch einen Prüfstand mit einem Testfahrzeug, welches mehrere Fahrzeugräder aufweist, wobei ein oder mehrere dieser Fahrzeugräder als Rad (2) mit einem zwischen der Nabe (60) und der Felge (70) angeordneten Kraftsensor (10) ausgebildet sind. Die Erfindung betrifft auch ein entsprechendes Verfahren zur Ermittlung von aerodynamischen Kennwerten eines Testfahrzeugs (4). Insbesondere bei einem mit einem breiten Band (9) ausgerüsteten Prüfstand können die zur Messung von Widerstandsbeiwerten relevanten Kräfte mit Hilfe des erfindungsgemäßen Rades (2) mit Kraftsensor (10) zuverlässig gemessen werden. Auf den Einsatz von die Strömung in ungewünschter Weise beeinflussenden Überkopfwaagen kann verzichtet werden.

## Beschreibung

Die Erfindung betrifft ein Rad für ein Testfahrzeug, wobei das Rad eine Felge und eine Nabe aufweist. Die Erfindung betrifft auch einen Prüfstand mit einem Testfahrzeug, welches mehrere Fahrzeugräder aufweist. Die Erfindung betrifft auch ein Verfahren zur Ermittlung von aerodynamischen Kennwerten eines Testfahrzeugs mit mehreren Fahrzeugrädern.

Zur Messung von auf ein Fahrzeug einwirkenden aerodynamischen Kräften und Momenten in einem Windkanal ist es bekannt, so genannte Windkanal-Waagen zu verwenden. Derartige Waagen werden beispielsweise beschrieben in "Aerodynamik des Automobils", Wolf-Heinrich Hucho, Vieweg & Sohn Verlag/GWV Fachverlage GmbH, Wiesbaden, 2005. Bekannte Windkanalwaagen sind konstruktiv sehr aufwendig und benötigen bedingt durch ihre Bauweise viel Platz.

Aufgabe der Erfindung ist es, eine präzise Messung von auf ein Testfahrzeug einwirkenden Kräften, insbesondere von aerodynamischen Kräften, unter Vermeidung der aus dem Stand der Technik bekannten Nachteile zu ermöglichen.

Diese Aufgabe wird gelöst durch ein Rad für ein Testfahrzeug, wobei das Rad eine Felge und eine Nabe aufweist, wobei zwischen der Nabe und der Felge zumindest ein Kraftsensor angeordnet ist. Mit Hilfe eines derartigen Rads können auf ein Testfahrzeug einwirkende Kräfte zuverlässig ermittelt werden. Besonders vorteilhaft ist die Verwendung in einem Windkanal, wobei der Einsatz aufwendiger Windkanal-Waagen entfallen kann. Erfindungsgemäß wird eine besonders präzise und zuverlässige Ermittlung der auf das Testfahrzeug einwirkenden Kräfte ermöglicht, da mit Hilfe des im Rad angeordneten Kraftsensors Kräfte nahe am Aufstandspunkt des Rads des Testfahrzeugs gemessen werden können.

Es ist dabei zweckmäßig, dass der Kraftsensor im Kraftfluss zwischen der Nabe und der Felge angeordnet ist.

Mit Vorteil kann der Kraftsensor zum Erfassen einer Kraft in Höhenrichtung ausgebildet sein. Dies ermöglicht insbesondere in einem Windkanal eine zuverlässige und präzise Ermittlung von Auf- und Abtriebskräften.

Vorzugsweise kann der Kraftsensor zumindest zum Erfassen von Radialkräften ausgebildet sein.

In vorteilhafter Weiterbildung der Erfindung kann der Kraftsensor zumindest zum Erfassen von Kräften in Seitenrichtung und/oder Längsrichtung des Testfahrzeugs ausgebildet sein.

Mit Vorteil weist der Kraftsensor zumindest eine Lagervorrichtung sowie ein oder mehrere Sensorelemente und ein Gehäuse auf.

Mit Vorteil kann der Kraftsensor Dehnmessstreifen zur Erfassung der auf die Lagervorrichtung wirkenden Kräfte aufweisen.

Mit Vorteil kann das Gehäuse des Kraftsensors an der Nabe angeflanscht sein.

Mit Vorteil kann der Kraftsensor unter Zuhilfenahme der Lagervorrichtung mit der Felge gekoppelt sein.

Die Aufgabe wird auch gelöst durch einen Prüfstand mit einem Testfahrzeug, welches mehrere Fahrzeugräder aufweist, wobei ein oder mehrere dieser Fahrzeugräder als Räder nach einem der Patentansprüche 1 bis 8 ausgebildet sind.

Mit Vorteil kann der Prüfstand als Aerodynamik-Prüfstand, z.B. als Windkanal, ausgebildet sein.

Mit Vorteil kann der Prüfstand ein antreibbares Band aufweisen, auf welchem die Fahrzeugräder des Testfahrzeugs abstützbar sind. Ein derartiges Band, vorzugsweise ein breites Laufband, ermöglicht in Verbindung mit einem Testfahrzeug, bei dessen Rädern zwischen der Nabe und der Felge jeweils zumindest ein Kraftsensor angeordnet ist, eine äußerst umfassende, zuverlässige und präzise Messung der und wiederholbare Messung der aerodynamischen Kräfte. Dabei kann auf so genannte Überkopf-Waagen, welche die Strömung in ungewünschter Weise beeinflussen, und auf Windkanal-Waagen wie sie aus dem Stand der Technik bekannt sind verzichtet werden

Mit Vorteil können Mittel zur Fesselung des Testfahrzeugs vorgesehen sein.

Mit Vorteil können einem oder mehreren der Mittel zur Fesselung des Testfahrzeugs ein oder mehrere Messvorrichtungen zugeordnet sein.

Mit Vorteil kann eine Lenkmaschine für das Testfahrzeug vorgesehen sein.

Die Aufgabe wird auch gelöst durch ein Verfahren zur Ermittlung von aerodynamischen Kennwerten eines Testfahrzeugs mit mehreren Fahrzeugrädern, wobei zumindest eines der Fahrzeugräder als Rad nach einem der Patentansprüche 2 bis 8 ausgebildet ist und einen Kraftsensor aufweist, wobei unter Zuhilfenahme des Kraftsensors zumindest eine Kraft in Höhenrichtung ermittelt wird.

Mit Vorteil kann unter Zuhilfenahme des Kraftsensors auch eine Kraft in Seitenrichtung und/oder eine Kraft in Längsrichtung ermittelt werden.

Mit Vorteil kann bei dem Verfahren ein Prüfstand nach einem der Patentansprüche 11 bis 14 verwendet werden.

Mit Vorteil kann eine Längsfessel für das Testfahrzeug verwendet werden, welche mit mindestens einer Messvorrichtung gekoppelt ist.

Mit Vorteil kann unter Verwendung der Messwerte der mindestens einen Messvorrichtung der Luftwiderstand des Testfahrzeugs zuzüglich der Rollreibung ermittelt werden und unter Verwendung der Messwerte des oder der Kraftsensoren der Luftwiderstand des Testfahrzeugs ohne Rollreibung ermittelt werden.

Weitere Einzelheiten und Vorteile der Erfindung werden nachfolgend beispielhaft anhand der Zeichnungen erläutert. Es zeigen:
- Fig. 1: ein schematisches Beispiel für einen Aerodynamik-Prüfstand,
- Fig. 2: ein weiteres schematisches Beispiel für einen Aerodynamik-Prüfstand,
- Fig. 3: schematisch den Aufbau eines Rads mit Kraftsensor.

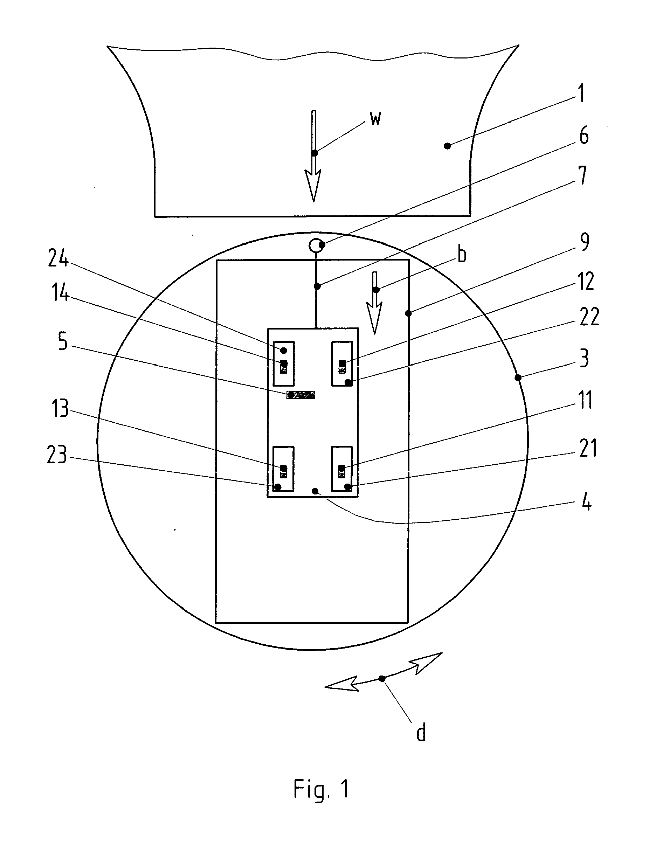

**Fig. 1** zeigt schematisch einen Prüfstand zur Ermittlung von aerodynamischen Kennwerten eines Testfahrzeugs 4. Der Prüfstand kann beispielsweise als Windkanal mit einer Düse 1 ausgebildet sein, wobei durch die Düse 1 ein Windvektor w definiert wird. Das Testfahrzeug 4 ist der Düse 1 zugewandt. Im gezeigten Beispiel ist eine Lenkmaschine 5 für das Testfahrzeug 4 vorgesehen. Das Testfahrzeug 4 kann jedoch auch durch einen Fahrer auf der Fahrspur gehalten werden. Im gezeigten Beispiel ist eine Vorrichtung zum Drehen des Testfahrzeugs 4 vorgesehen, welche z.B. als Drehtisch 3 mit zwei Drehrichtungen d ausgebildet sein kann. Im gezeigten Beispiel ist ein Band 9, auf dem sich die Räder 21, 22, 23, 24 des Testfahrzeugs 4 abstützen. Das Band 9 kann angetrieben werden, sodass sich die Oberfläche des Bands 9 in Bewegungsrichtung b bewegt und die Räder 21, 22, 23, 24 des Testfahrzeugs 4 auf dem Band 9 abrollen.

Mit Hilfe des Bands 9 kann im Windkanal sowohl die Kinematik der Relativbewegung zwischen Fahrzeug und Straße als auch die Kinematik der drehenden Räder des Fahrzeugs reproduziert werden. Statt dem in Fig. 1 gezeigten breiten Band 9 kann auch je Rad 21, 22, 23 bzw. 24 ein kleines Laufband vorgesehen werden, um die Kinematik der drehenden Räder zu reproduzieren. Die kleinen Laufbänder für die Räder können durch ein weiteres Laufband zu einer so genannten Fünfband ("five belt") - Versuchsanordnung ergänzt werden. Die weitaus realistischeren Versuchsbedingungen ergeben sich jedoch bei Verwendung eines breiten Bands 9, wie es in Fig. 1 gezeigt wird, wobei das Band 9 zumindest annähernd die Breite des Testfahrzeugs 4 aufweist.

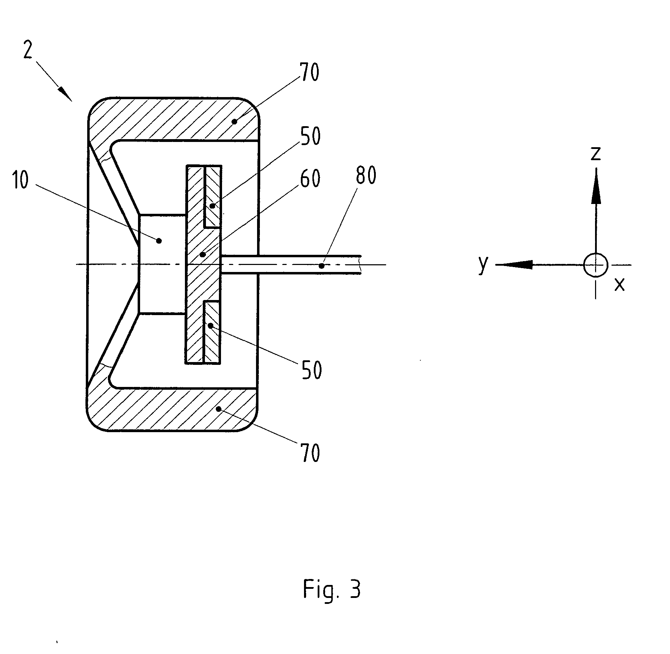

Im gezeigten Beispiel weisen die Räder 21, 22, 23, 24 des Testfahrzeugs 4 jeweils einen Kraftsensor 10 (sieheFig. 3) bzw. 11, 12, 13, 14 auf. Mit Hilfe der Kraftsensoren 11 bis 14 können an den Rädern 21 bis 24 Seitenkraft, Auf- und Abtriebskraft sowie die Rollwiderstandskraft ermittelt werden. Aufbau, Anordnung und Funktionsweise des Kraftsensors 10 bzw. 11 bis 14 werden nachfolgend und insbesondere im Zusammenhang mit Fig. 3 näher beschrieben.

Im in Fig. 1 gezeigten Beispiel ist eine Längsfessel 7 für das Testfahrzeug 4 vorgesehen, wobei der Längsfessel 7 eine Messvorrichtung 6 zugeordnet sein kann. Mit Hilfe der Messvorrichtung 6, welche der Längsfessel 7 zugeordnet ist, kann die Summe der Luft- und Rollwiderstandskräfte am Fesselungspunkt gemessen werden. Die auf das Testfahrzeug 4 wirkenden Luftwiderstandskräfte können durch Subtraktion der mit Hilfe der Kraftsensoren 11 bis 14 ermittelten Rollwiderstandskräfte von der unter Zuhilfenahme der Messvorrichtung 6 ermittelten Summe aus Luft- und Rollwiderstandskräften ermittelt werden.

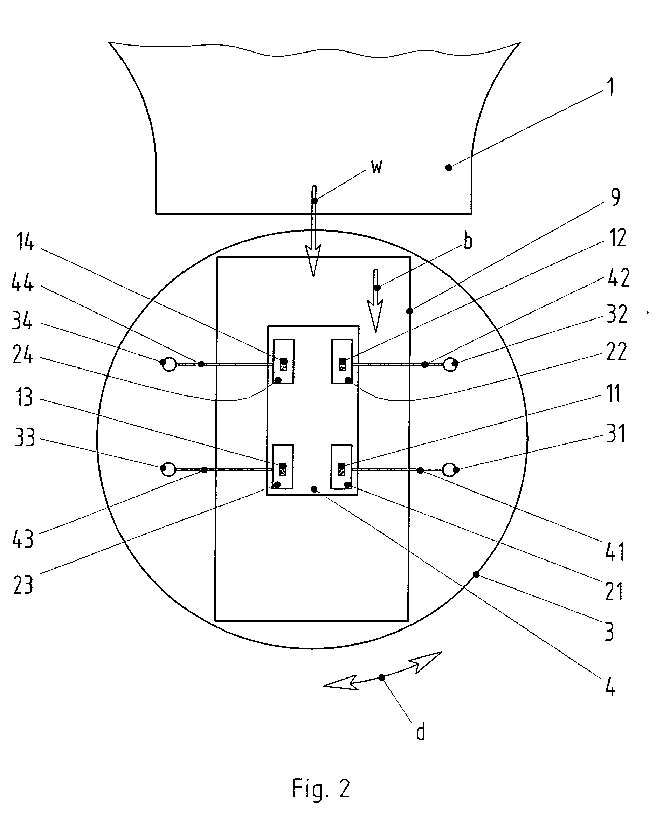

**Fig. 2** zeigt ein weiteres Beispiel für einen aerodynamischen Prüfstand. Insoweit der hier gezeigte Prüfstand mit dem in Fig. 1 gezeigten Beispiel übereinstimmt, werden in beiden Figuren identische Bezugszeichen verwendet. In Fig. 2 ist anders als in Fig. 1 keine Längsfesselung des Testfahrzeugs 4 gezeigt. Vielmehr sind im Beispiel gemäß Fig. 2 seitliche Mittel 41, 42, 43, 44 zur Fesselung des Testfahrzeugs 4 vorgesehen. Abweichend von der Darstellung in Fig. 2 kann es zweckmäßig sein, dass die Mittel 41, 42, 43, 44 zur Fesselung des Testfahrzeugs 4 einen von 90° verschiedenen Winkel zu den Seitenwänden des Testfahrzeugs 4 anzuordnen. Die Winkel können, müssen aber nicht, voneinander unterschiedlich sein. Vorzugsweise können Winkel im Bereich zwischen beispielsweise ca. 45° und beispielsweise ca. 135° vorgesehen sein. Im gezeigten Beispiel ist jedem Mittel 41, 42, 43, 44 zur Fesselung jeweils eine Messvorrichtung 31, 32, 33, 34 zugeordnet.

**Fig. 3** zeigt ein Ausführungsbeispiel für ein erfindungsgemäßes Rad 2 mit zumindest einem zwischen der Nabe 60 und der Felge 70 des Rads 2 angeordneten Kraftsensor 10. Der Kraftsensor 10 kann ein oder mehrere nicht näher dargestellte Lagervorrichtungen, ein oder mehrere nicht näher dargestellte Sensorelemente und ein Gehäuse aufweisen. Im gezeigten Beispiel ist das Gehäuse des Kraftsensors 10 an der Nabe 60 angeflanscht. Die Nabe 60 ist mit einer Antriebswelle 80 verbunden. Weiterhin weist das Rad 2 eine Bremsscheibe 50 auf. Mit Hilfe des Kraftsensors 10 wird die in Höhenrichtung z wirkende Kraft nahe des Aufstandspunkts des Rads 2 gemessen. Kräfte in Seitenrichtung y und/oder in Längsrichtung x können ebenfalls mit Hilfe des Kraftsensors 10 und/oder Zuhilfenahme von weiteren Messvorrichtungen 31, 32, 33, 34 ermittelt werden. Mit Hilfe des Kraftsensors 10 können bedingt durch seinen Aufbau und seine Anordnung insbesondere Radialkräfte erfasst werden. Bei schräg angreifender Strömung können jedoch auch zuverlässig Kräfte in Seitenrichtung y ermittelt werden.

Insbesondere bei einem mit einem breiten Band 9 ausgerüsteten Prüfstand können die zur Messung von Widerstandsbeiwerten relevanten Kräfte mit Hilfe des erfindungsgemäßen Rades 2 mit Kraftsensor 10 zuverlässig gemessen werden. Auf den Einsatz von die Strömung in ungewünschter Weise beeinflussenden Überkopfwaagen kann verzichtet werden.

## Patentansprüche

1. Rad (2) für ein Testfahrzeug (4), wobei das Rad (2) eine Felge (70) und eine Nabe (60) aufweist, **dadurch gekennzeichnet, dass** zwischen der Nabe (60) und der Felge (70) zumindest ein Kraftsensor (10) angeordnet ist.

2. Rad (2) nach Patentanspruch 1, wobei der Kraftsensor (10) im Kraftfluss zwischen der Nabe (60) und der Felge (70) angeordnet ist.

3. Rad (2) nach Patentanspruch 1 oder 2, wobei der Kraftsensor (10) zumindest zum Erfassen einer Kraft in Höhenrichtung (z) ausgebildet ist.

4. Rad (2) nach einem der vorangehenden Patentansprüche, wobei der Kraftsensor (10) zumindest zum Erfassen von Radialkräften ausgebildet ist.

5. Rad (2) nach einem der vorangehenden Patentansprüche, der Kraftsensor (10) zumindest zum Erfassen von Kräften in Seitenrichtung (y) und/oder Längsrichtung (x) ausgebildet ist.

6. Rad (2) nach einem der vorangehenden Patentansprüche, wobei der Kraftsensor (10) zumindest eine Lagervorrichtung, ein oder mehrere Sensorelemente und ein Gehäuse aufweist.

7. Rad (2) nach Patentanspruch 6, wobei der Kraftsensor (10) Dehnmessstreifen zur Erfassung der auf die Lagervorrichtung wirkenden Kräfte aufweist.

8. Rad (2) nach Patentanspruch 6 oder 7, wobei das Gehäuse des Kraftsensors (10) an der Nabe (60) angeflanscht ist.

9. Rad (2) nach einem der Patentansprüche 6 bis 8, wobei der Kraftsensor (10) unter Zuhilfenahme der Lagervorrichtung mit der Felge (70) gekoppelt ist.

10. Prüfstand mit einem Testfahrzeug (4), welches mehrere Fahrzeugräder aufweist, wobei ein oder mehrere dieser Fahrzeugräder als Räder (2, 21, 22, 23, 24) nach einem der vorangehenden Patentansprüche ausgebildet sind.

11. Prüfstand nach Patentanspruch 10, wobei der Prüfstand ein Aerodynamik-Prüfstand ist.

12. Prüfstand nach Patentanspruch 10 oder 11 mit einem antreibbaren Band (9), auf dem die Fahrzeugräder des Testfahrzeugs (4) abstützbar sind.

13. Prüfstand nach Patentanspruch 11 oder 12, wobei Mittel zur Fesselung (7 bzw. 41, 42, 43, 44) des Testfahrzeugs (4) vorgesehen sind.

14. Prüfstand nach Patentanspruch 13, wobei einem oder mehreren der Mittel zur Fesselung (7 bzw. 41, 42, 43, 44) des Testfahrzeugs (4) mindestens eine Messvorrichtung (6, 31, 32, 33, 34) zugeordnet ist.

15. Prüfstand nach einem der Patentansprüche 12 bis 14, wobei eine Lenkmaschine (5) für das Testfahrzeug (4) vorgesehen ist.

16. Verfahren zur Ermittlung von aerodynamischen Kennwerten eines Testfahrzeugs (4) mit mehreren Fahrzeugrädern, wobei zumindest eines der Fahrzeugräder als Rad (2, 21, 22, 23, 24) nach einem der Patentansprüche 3 bis 9 mit einem Kraftsensor (10) ausgebildet ist, wobei unter Zuhilfenahme des Kraftsensors (10) zumindest eine Kraft in Höhenrichtung (z) ermittelt wird.

17. Verfahren nach Patentanspruch 16, wobei unter Zuhilfenahme des Kraftsensors (10) des mindestens einen Rads (2, 21, 22, 23, 24) auch eine Kraft in Seitenrichtung (y) und/oder eine Kraft in Längsrichtung (x) ermittelt wird.

18. Verfahren nach Patentanspruch 16 oder 17, wobei ein Prüfstand nach einem der Patentansprüche 12 bis 15 verwendet wird.

19. Verfahren nach Patentanspruch 18, wobei mindestens eine Längsfessel (7) zur Fesselung des Testfahrzeugs(4) verwendet wird, welche mit mindestens einer Messvorrichtung (6) gekoppelt ist.

20. Verfahren nach Patentanspruch 19, wobei unter Verwendung der Messwerte der mindestens einen Messvorrichtung (6) der Luftwiderstand des Testfahrzeugs (4) zuzüglich der Rollreibung ermittelt wird und unter Verwendung der Messwerte des oder der Kraftsensoren (10) der Luftwiderstand des Testfahrzeugs (4) ohne Rollreibung ermittelt wird.
